(19) Europäisches Patentamt European Patent Office Office européen des brevets

(11) **EP 2 805 145 B1**

(12) **EUROPEAN PATENT SPECIFICATION**

(45) Date of publication and mention
of the grant of the patent:
**21.12.2016 Bulletin 2016/51**

(21) Application number: **13710019.4**

(22) Date of filing: **17.01.2013**

(51) Int Cl.:
*G01N 3/00* *(2006.01)*     *G01L 1/00* *(2006.01)*

(86) International application number:
**PCT/IB2013/050440**

(87) International publication number:
**WO 2013/108208 (25.07.2013 Gazette 2013/30)**

(54) **METHOD FOR MEASURING THE POISSON' S RATIO AND THE RESIDUAL STRESS OF A MATERIAL**

VERFAHREN ZUR MESSUNG DER POISSONZAHL UND DER RESTSPANNUNG EINES MATERIALS

PROCÉDÉ DE MESURE DU COEFFICIENT DE POISSON ET DE LA CONTRAINTE RÉSIDUELLE D'UNE MATIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2012 IT RM20120017**

(43) Date of publication of application:
**26.11.2014 Bulletin 2014/48**

(73) Proprietor: **Universita' Degli Studi Roma Tre 00154 Roma (IT)**

(72) Inventors:
• **SEBASTIANI, Marco**
**I-00146 Rome (IT)**
• **BEMPORAD, Edoardo**
**I-00146 Rome (IT)**

(74) Representative: **Capasso, Olga et al De Simone & Partners SpA Via Vincenzo Bellini, 20 00198 Roma (IT)**

(56) References cited:
**DE-A1- 19 614 897     DE-A1-102005 008 281 US-A- 3 765 230     US-A- 4 823 607**

• **KORSUNSKY A M ET AL: "Residual stress evaluation at the micrometer scale: Analysis of thin coatings by FIB milling and digital image correlation", SURFACE AND COATINGS TECHNOLOGY, ELSEVIER, AMSTERDAM, NL, vol. 205, no. 7, 25 December 2010 (2010-12-25), pages 2393-2403, XP027533953, ISSN: 0257-8972 [retrieved on 2010-09-25]**

**Description**

The subject matter of the present invention is a method for measuring the Poisson's ratio and the residual stress of any material, that is, a metal, ceramic, polymeric, crystalline or amorphous material, be it in the form of a bulk material or surface coating.

The techniques currently available in the literature are extremely complicated in terms of experimental realization, they involve uncertainty of measurement, often 100% higher than the true value, and they require knowledge of the elastic modulus.

The patent application US4823607A discloses a prior art method to etch structures, such as T shaped figures and beams, into a silicon substrate and remove the underlying substrate in order to observe the deformation of the structure and deduce its mechanical properties, such as the stress and the Poisson's ratio.

Korsunsky et al. disclose in their article "Residual stress evaluation at the micrometer scale: Analysis of thin coatings by FIB milling and digital image correlation", Surface and Coatings Technology, Vol. 205(7), 2010, pages 2393-2403 a method to evaluate the residual stresses of a material surface by milling an annular trench in the material and observing the resulting strain relief thereof. In particular, the method proposed in the following represents an extremely significant step forward regarding the techniques for measurement of the Poisson's ratio for systems made up of a substrate and an outer coating, with more specific reference to thin coatings.

The aim of the present invention is to provide a method for measuring the Poisson's ratio and the residual stress that makes it possible to overcome or at least reduce the disadvantages and the drawbacks mentioned concerning the available techniques of the prior art.

This aim is fully achieved by a method for measuring the Poisson's ratio and the residual stress in materials with a surface residual stress field, characterized in that it comprises, in sequential order, the stages of: predisposing a sample of material with a surface residual stress field; removing two first parallel strips of material from a surface of the sample wherein there is defined an orthogonal Cartesian plane defined by an x-axis and a y-axis (step-I); measuring the strains, at least along the x-axis ($\Delta\varepsilon^{(I)}_x$) and the y-axis ($\Delta\varepsilon^{(I)}_y$), of the sample of material on said surface; removing from said surface of the sample, two second parallel strips of material orthogonal to said two first parallel strips (step-II); measuring the strains, at least along the x-axis ($\Delta\varepsilon^{(II)}_x$) and the y-axis ($\Delta\varepsilon^{(II)}_y$), of the sample of material on said surface; calculating, following complete relaxation of the above-mentioned surface residual stresses, that is, for values of $h/d$ greater than 1.2, the Poisson's ratio of the sample of material by means of the following formula:

$$\left.\frac{\Delta\varepsilon^{(II)}_x}{\Delta\varepsilon^{(I)}_x}\right|_{\frac{h}{d}>1.2} = \frac{1}{1+v} \qquad \text{(eq. 1)}$$

where v, h, and d represent the Poisson's ratio, the maximum height of each one of said strips, and the distance between the two first parallel strips, respectively.

The technique utilized for measurement of the strains shall depend upon the scale of dimensions to which the method is applied. In the case of measurement in thin films, in which the characteristic dimensions of the cuts are on the order of several micrometers, digital image correlation (DIC) on images obtained under a scanning electron microscope (SEM) is the only technique that can be utilized for measurement of the strains.

Further conditions for the applicability of the preceding equation are that (i) the length of the two first parallel strips L be greater (preferably at least three times greater (L>3•d), more preferably at least ten times greater (L>10•d)) than the distance there between d, for the purpose of avoiding border effects on the strains measured, and that (ii) in the case of coatings, the ratio between the distance between the first two bands and the thickness of the coating t be at least less than 1.0, preferably less than 0.8 (d/t<0.8), so as to avoid substrate effects on the strains measured).

These conditions have been verified by means of finite element simulations, which demonstrated the complete validity of the equation (1) for the two conditions cited herein.

If these two latter conditions are not confirmed, the hypothesis of complete relaxation of the stresses would not demonstrated, and the Poisson's ratio could not be calculated using the equation (1).

Yet, the underlying principle of the invention (that is, that the ratio between the two relaxation strains $\Delta\varepsilon^{(II)}_x/\Delta\varepsilon^{(I)}_x$ is a unique function of the Poisson's ratio) remains entirely valid, with the sole variant that calculation of the Poisson's ratio must be carried out by means of finite element simulations, utilizing a correction factor, which is described herein below, and not by means of direct utilization of the equation (1).

It is therefore preferable, but not necessary, that the two conditions cited hereinabove are fulfilled.

Removal of the four strips in succession can also be carried out by increments, that is, by means of the realization of a sequence of small increments in penetration depth, which lead to the same final effects described as step-I and step-II. The realization of an incremental trial makes it possible to analyze a significantly greater number of experimental points and offers greater statistical validity to the strain measurements ($\Delta\varepsilon^{(II)}_x$, $\Delta\varepsilon^{(II)}_x$, $\Delta\varepsilon^{(I)}_y$, $\Delta\varepsilon^{(II)}_y$), which, in this case, are obtained by means of interpolation of the relaxation profiles.

Characteristics and advantages will prove to emerge more clearly from the following description of a preferred, but not exclusive, embodiment, which is illustrated purely by way of non-limiting example in the accompanying drawings, wherein:

- Figure 1A is top plan view of a sample of material to which the method of the invention is to be applied, under conditions of equi-biaxial stress;
- Figure 1B is a top plan view of the sample of material appearing in Figure 1A, following a first step of removal of material;
- Figure 1C is a top plan view of the sample appearing in Figure 1B, following a second further step of removal of material;

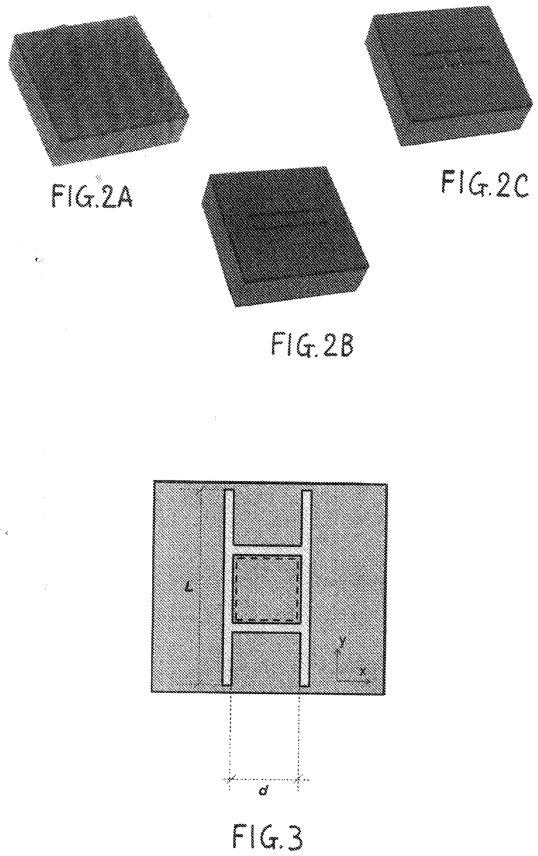

- Figure 2A is a perspective view of a system made up of a substrate and a coating, to be subjected to the method according to the present invention;
- Figure 2B is a perspective view of the system appearing in Figure 2A, following a first stage of removal of material;
- Figure 2C is a perspective view of the system appearing in Figure 2B, following a second further stage of removal of material;
- Figure 3 is a top view of a system made up of a substrate and a coating that has been subjected to the method according to the present invention, in which some of the geometric quantities used in a finite element simulation are highlighted. It is important to underline that, in order to confirm the full validity of the analytical (and asymptotic) solution reported in equation (1), the length L of the two longitudinal strips must be greater (preferably at least three times greater, more preferably at least 10 times greater) than the distance there between;
- Figure 4a shows the profile of the relaxation strain, along the x-axis of Figure 3, in a system made up of a substrate and a coating of chromium nitride (CrN), following a first stage of controlled removal of material (as shown in figure 1B), in which the strain value is normalized with respect to the parameter $E/(1-v^2)$ and the penetration depth is normalized with respect to the distance d between the two strips;
- Figure 4b shows the profile of the relaxation strain, long the x-axis of Figure 3, in the system appearing in Figure 4a, following a second, further stage of controlled removal of material (as shown in figure 1C), in which the strain value is normalized with respect to the biaxial elastic modulus M and the penetration depth is normalized with respect to the distance d between the two strips;
- Figure 4c shows the plot of the ratio between the relaxation strains, which is normalized with respect to (1+v), vs the relative penetration depth h/d;
- Figures 5A, 5B, and 5C show three images, acquired by means of a scanning electron microscope (SEM) and relating to the implementation of the method according to the present invention on a thin coating of chromium nitride (CrN) with a thickness of 3 $\mu$m and obtained using physical vapor deposition (PVD) techniques; the controlled removal of material is realized using focused ion beam microscopy (FIB);
- Figure 6A is a graph indicating the sequence of the relaxation strains in the coating, as obtained in the course of an incremental trial. The critical points corresponding to Figures 5A, 5B, and 5C are also identified in Figure 6A, corresponding to the end of the first stage of material removal (Step-1) and after the second, further stage of material removal (Step-2);
- Figure 6B shows the set of eight tests performed on the coating of CrN analyzed (only the strain data for Step-1 are reported).

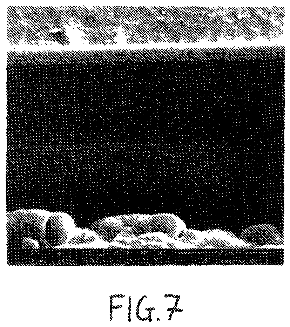

- Figure 7 shows a microscope image of a section of the coating appearing in Figures 5A, 5B, 5C, and 6.

The method for measuring the Poisson's ratio and residual stress according to the present invention makes it possible to measure, in a semi-destructive manner, the Poisson's ratio and the residual stress of any material.

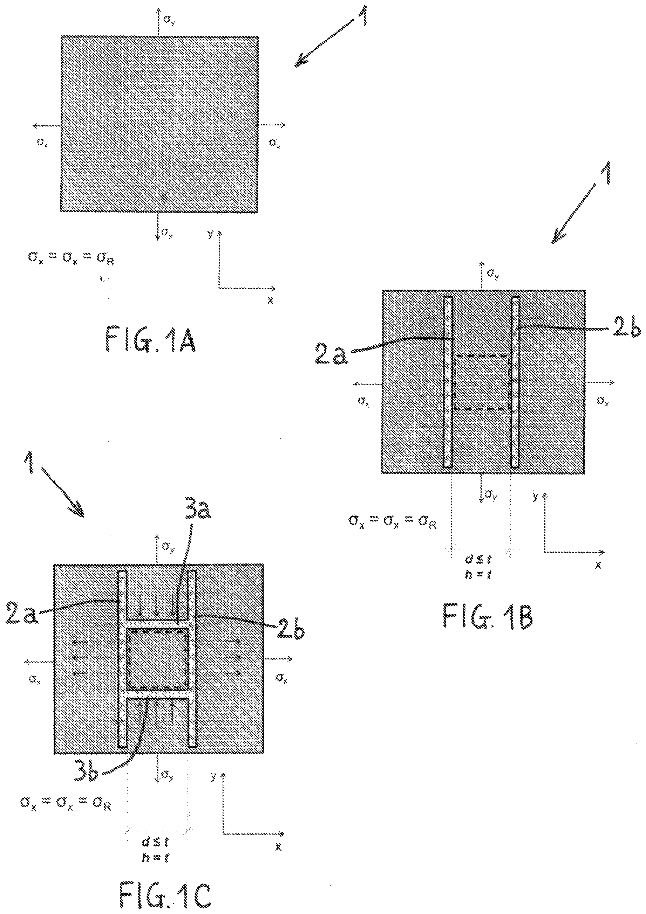

A required condition for the applicability of the present method consists in the presence of a surface residual stress field in the material to be investigated (see figure 1a), which, however, systematically occurs in the case of surface coatings.

In Figures 1A, 1B and 1C, the number "1" indicates a sample of material on which the Poisson's ratio and the residual stress are to be measured by means of a controlled removal of a defined volume of material, according to geometric quantities and procedures described herein below.

The controlled removal of material takes place according to two sequential steps, that is, a first step and a second step.

The first step provides for the removal of two parallel strips 2a, 2b on the surface of the sample of material 1 (see figure 1b).

The distance between the two strips, that is, between the two cuts 2a, 2b, is on the same order of size as the height of each cut, whereas the length thereof shall be greater, preferably at least three times greater, more preferably at least ten times greater, than the distance between the strips, for the purpose of providing a relaxation independent of any border effects.

In any case, the method proposed herein is absolutely independent of the dimensions of the cut realized, and of the technique adopted for the controlled removal of material, provided that the sole condition of the length of the two cuts being much greater than the distance there between is maintained. If this is not the case, measurement of the Poisson's ratio would be possible in any case by using suitable finite element models, instead of using the asymptotic solution reported in the equation (1).

Following the removal of material, one proceeds with the measurement of the relaxation strain field resulting from the release of the residual stresses, in the area internal of the two strips.

Measurement of the relaxation strain can take place by means of any conventional or non-conventional technique, for example by means of digital image correlation. In particular, the specific technique utilized for measurement of the strains shall depend upon the scale of dimensions to which the method is applied. In the case of measurement in thin films, in which the characteristic dimensions of the cuts are on the order of several micrometers, the only technique that can be utilized for measurement of the strains is digital image correlation (DIC) on images obtained under a scanning electron microscope (SEM).

Once an orthogonal Cartesian frame of reference has been defined and the axis orthogonal to the two strips realized has been identified as the x-axis, the strain ($\Delta\varepsilon^{(I)}_x$) along the x-axis and the strain ($\Delta\varepsilon^{(I)}_y$) along the y-axis are measured, both strains having occurred following the above-described first step.

When necessary, measurement is also taken of the strain along a third axis oriented at 45° with respect to the two x- and y- reference axes.

The first step can also be carried out in increments, that is, by subdividing the cut into many intermediate steps and gradually measuring the relaxation strain. A procedure carried out in this manner would make it possible to obtain the profile of residual stress within the material.

The second step provides for the removal of two additional parallel strips 3a, 3b, which intersect and are perpendicular to the strips 2a, 2b realized during the first step (see figure 1c).

The distance between these two additional strips 3a, 3b is on the same order of size as the height of the cut, whereas the length thereof must be equal or greater than the distance between the same strips.

This procedure leads to the isolation of a parallelepiped at the center of the cuts made and constrained solely at the base, and involves an additional field of relaxation strains with respect to the first step.

In a manner similar to that which is done after the first step, measurement is taken of the strain ($\Delta\varepsilon^{(II)}_x$) along the x-axis and of the strain ($\Delta\varepsilon^{(II)}_y$) along the y-axis, both occurring after the second step.

Where necessary, the strain along a third axis oriented at 45° with respect to the two x- and y-reference axes, is also measured.

As demonstrated in detail below in the present description, the ratio between the strains $\Delta\varepsilon^{(I)}_x$ and $\Delta\varepsilon^{(II)}_x$ is a unique function of the Poisson's ratio of the material, that is,

$$\frac{\Delta\varepsilon^{(I)x}}{\Delta\varepsilon^{(II)x}} = f(\nu) \qquad \text{(eq. 2)}$$

The relaxation strain $\Delta\varepsilon^{(II)}_x$ is always calculated with respect to the initial state of the material to be examined, that is, prior to the formation of the cuts.

Furthermore, the field of relaxation strains measured after the first step and the field measured after the second step make it possible to measure the residual stress present in the material, subject to knowledge, or assumption, of the value of the elastic modulus.

In order to the test the basic idea underlying the model, an experimental campaign was carried out using the finite element simulation method (FEM), with the objective of faithfully reproducing the sequence of material removal for a wide range of properties of the materials.

First of all, a three-dimensional model was designed, in which the more general case of a system made up of a substrate and coating was represented.

The selected geometric parameters included:

- $d/t = 0.8$ (<1.0)
- $L = 10 \cdot d$
- $h_{max} = t$

where d represents the distance between the strips, t is the thickness of the coating, L is the length of the strips, and h is the height of the cut.

The above-mentioned model is independent of the characteristic scale considered, in that the behavior of the materials is assumed to be homogeneous and isotropic and parameters of a microstructural type were not introduced therein.

However, elastic anisotropy effects and/or microstructural parameters such as polycrystalline structure, phase transition possibilities, and scale factors on the mechanical behavior can be introduced into the model.

The combinations of materials considered included:

- $E_R$ = 70 Gpa; 200 Gpa; 350 Gpa
- $v_R$ = 0.25; 0.35; 0.42
- $E_S$ = 70 Gpa; 200 Gpa; 350 Gpa
- $v_S$ = 0.25; 0.35; 0.42

where $E_R$ and $E_S$ represent the elastic moduli of the coating and the substrate, respectively, whereas $v_R$ and $v_S$ are the Poisson's ratios of the coating and the substrate, respectively.

The present mechanical model provides for the following stages, which are to be carried out in sequential order:

- application of a calibration constant for residual stress, which is carried out by simply applying a variation in temperature to the entire system made up of the substrate and coating;
- incremental removal of elements, which simulates the real incremental removal of material, according to the geometry characteristic of the first step;
- calculation of the relaxation strains x and y based on the height h of the cut;
- incremental removal of elements, which simulates the removal of material, according to the geometry characteristic of the second step;
- calculation of the relaxation strains x and y based on the height h of the cut.

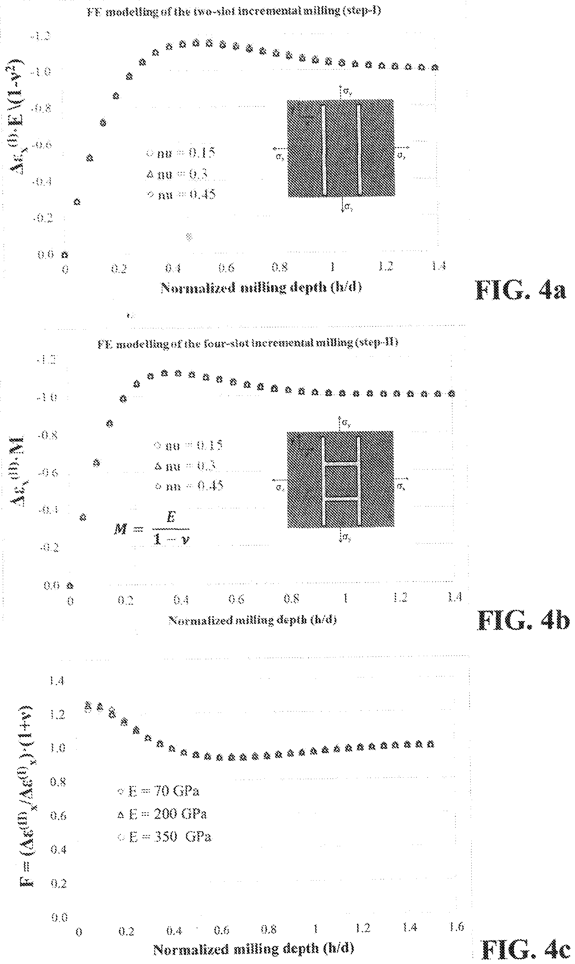

With reference to Figure 4A, the simulated relaxation strain profile clearly shows a shape of the relaxation curve that is universal for every type of material, having normalized the data with respect to the quantity $E/(1-v^2)$. A relaxation profile independent of the properties of the substrate for the case of d/t = 0.8, as well as the achievement of saturation in the relaxation of the residual stresses for values of $h/d > 1.2$, are also inferred from the same Figure 4A.

The simulations also confirmed that the relaxation strain $\Delta\varepsilon^{(I)}_y$ in the y direction is null after the first step of material removal, so as to obtain:

$$\Delta\varepsilon^{(I)}_y = 0 \qquad\qquad \text{(eq. 3)}$$

The evidence of complete saturation in the simulated curve demonstrates that there is a complete relaxation of the stresses in the x direction after the first step of removal, that is,

$$\Delta\sigma_{xx}\Big|_{\frac{h}{d}>1.2} = -\sigma_R \qquad\qquad \text{(eq. 4)}$$

where $\Delta\sigma_{xx}$ represents the relaxation of the stresses in the x direction after the first step of controlled removal of material.

Generic relaxation of the stresses after the first removal step can obviously be described by Hooke's law, generalized as:

$$\Delta\varepsilon^{(I)}_{xx} = \frac{1}{E}\left(\Delta\sigma_{xx} - v\Delta\sigma_{yy}\right)$$

$$\Delta\varepsilon^{(I)}_{yy} = 0 = \frac{1}{E}\left(\Delta\sigma_{yy} - v\Delta\sigma_{xx}\right) \qquad\qquad \text{(eq. 5)}$$

wherein $\Delta\varepsilon^{(I)}_y = 0$ is assumed, as confirmed by the simulations. The solution of the system of equations (5) leads to the

following expressions:

$$\Delta\sigma_{yy} = v\Delta\sigma_{xx} \qquad \text{(eq. 6a)}$$

$$\Delta\varepsilon_{xx}^{(I)} = \frac{1}{E}\left(1-v^2\right)\Delta\sigma_{xx} \qquad \text{(eq. 6b)}$$

The union of the equations (3-4-5) leads to the following relation, which unequivocally links the strain $\Delta\varepsilon^{(II)}_x$ to the pre-existing state of biaxial stress in the material:

$$\Delta\varepsilon_{xx}^{(I)}\bigg|_{\frac{h}{d}>1.2} = -\frac{1}{E}\left(1-v^2\right)\cdot\sigma_R \qquad \text{(eq. 7)}$$

Referring now to Figure 4b (second removal step), the simulated relaxation strain profile clearly shows a shape of the relaxation curve that is universal for every type of material, having normalized the data with respect to the quantity E/(1-v), that is, with respect to the biaxial modulus of the material M. Figure 4b also shows a relaxation profile independent of the properties of the substrate for the case of d/t = 0.8, as well as a complete relaxation of the residual stresses for values of h/d > 1.2 (saturation of the curve).

The residual stress present in the material can therefore also be calculated after the second step of material removal, in the following manner:

$$\Delta\varepsilon_{x}^{(II)}\bigg|_{\frac{h}{d}>1.2} = -\sigma_R \cdot \frac{1-v}{E} \qquad \text{(eq. 8)}$$

The simulations also confirmed that, after the second step, the relaxation strain $\Delta\varepsilon^{(II)}_y$ in the y direction is identical to the relaxation strain $\Delta\varepsilon^{(II)}_x$ in the x direction.

This latter equality can be easily checked in experimental practice by means of the analysis of the strains in both directions.

Combining the following two equations, obtained previously:

$$\Delta\varepsilon_{xx}^{(I)}\bigg|_{\frac{h}{d}>1.2} = -\frac{1}{E}\left(1-v^2\right)\cdot\sigma_R$$

$$\Delta\varepsilon_{x}^{(II)}\bigg|_{h>>d} = -\sigma_R \cdot \frac{1-v}{E}$$

the expression is obtained for calculation of the Poisson's modulus of the material, that is:

$$\frac{\Delta\varepsilon_{x}^{(II)}}{\Delta\varepsilon_{x}^{(I)}}\bigg|_{\frac{h}{d}>1.2} = \frac{1}{1+v}$$

This latter expression is valid only following complete relaxation of the stresses, that is, for h/d > 1.2.

In any case, the Poisson's ratio can also be easily calculated for values of h/d < 1.2, by using finite element simulations.

Referring now to Figure 4c, the curve represented therein, which is clearly independent of the elastic modulus, can be used as a universal graph for calculation of the Poisson's ratio for each value of h/d.

For example, let us assume that due to instrument-related reasons, at most a cut with a height of h/d = 0.4 can be made and that the ratio between the two strains measured is:

$$\Delta \varepsilon^{(II)}_{x} / \Delta \varepsilon^{(I)}_{x} = 0.84$$

In this latter case, it is simply sufficient to enter the universal curve for h/d = 0.4 and evaluate the multiplying factor F to be used in the following equation (in this case F ~ 0.95):

$$\left. \frac{\Delta \varepsilon^{(II)}_{x}}{\Delta \varepsilon^{(I)}_{x}} \right|_{\frac{h}{d} > 1.2} = F \cdot \frac{1}{1 + v} \qquad \text{(eq. 9)}$$

Obviously, the result is $F = 1$ for h/d > 1.2 (complete relaxation of the residual stresses).

The method proposed herein can also be utilized for calculation of the Poisson's module in the case of non-equibiaxial residual stress, that is, when:

$$\sigma_x \neq \sigma_y$$

In this case, one obtains non-homogeneous relaxation strains in the x and y directions.

Considering for example the case in which h/d > 1.2, after the first step of removal of the material, the result is only a uniaxial relaxation strain in the x direction, the strain along the y-axis being null, in that the material is still totally constrained in that direction.

Therefore, (based on equations 5-6) the result is:

$$\Delta \varepsilon^{(I)}_{x} = -\frac{\sigma_X}{E}\left(1 - v^2\right)$$

$$\Delta \varepsilon^{(I)}_{y} = 0 \qquad \text{(eq. 10)}$$

After the second step for material removal, a relaxation strain takes place in the x direction and a relaxation strain takes place in the y direction, and they can easily be calculated using Hooke's law, as generalized in the following manner:

$$\Delta \varepsilon^{(II)}_{X} = -\frac{\sigma_X}{E} + v\frac{\sigma_Y}{E}$$

$$\Delta \varepsilon^{(II)}_{Y} = -\frac{\sigma_Y}{E} + v\frac{\sigma_X}{E} \qquad \text{(eq. 11)}$$

Combining two of the equations reported above, an expression is obtained in this case as well for calculation of the Poisson's ratio of the material, that is,

$$\frac{\Delta\varepsilon_X^{(II)}}{\Delta\varepsilon_X^{(I)}} = \frac{1}{1-v^2}\left[1-v\,\frac{\sigma_Y}{\sigma_X}\right] \qquad \text{(eq. 12)}$$

or, using Hooke's law once again, as generalized:

$$\frac{\Delta\varepsilon_X^{(II)}}{\Delta\varepsilon_X^{(I)}} = \frac{1}{1-v^2}\left[1-v\,\frac{\Delta\varepsilon_Y^{(II)}+v\cdot\Delta\varepsilon_X^{(II)}}{\Delta\varepsilon_X^{(II)}+v\cdot\Delta\varepsilon_Y^{(II)}}\right] \qquad \text{(eq. 13)}$$

This equation can be solved for calculation of the Poisson's ratio.

It is important to note that in the case of equibiaxial stress in which $\sigma_x = \sigma_y$, this latter equation is reduced to the equation:

$$\left.\frac{\Delta\varepsilon_x^{(II)}}{\Delta\varepsilon_x^{(I)}}\right|_{\frac{h}{d}>1.2} = \frac{1}{1+v}$$

specified above.

Given a generic function:

$$z = z(x_1, x_2, \ldots x_p) \qquad \text{(eq. 14)}$$

where z is the derived quantity and $x_1$, $x_2$, ... $x_p$ are n variables experimentally measured and, given the mean square error for each variable:

$$\mu_{x_j} = \sqrt{\frac{\sum_{i=1}^{n}(x_{ji}-\bar{x}_j)}{n-1}} \qquad \text{(eq. 15)}$$

the propagated error in the derived quantity shall be:

$$\mu_z = \sqrt{\sum_{j=1}^{p}\left(\frac{\partial z}{\partial x_j}\right)^2 \mu_{x_j}} \qquad \text{(eq. 16)}$$

In the present case, the equation utilized for calculating the Poisson's ratio can be written as follows:

$$v = \left.\frac{\Delta\varepsilon_x^{(I)}}{\Delta\varepsilon_x^{(II)}}\right|_{\frac{h}{d}>1.2} - 1 \qquad \text{(eq. 17)}$$

thus involving a function of the following type:

$$z = \frac{x_1}{x_2}$$

(eq. 18)

where:

$Z = V$
$X_1 = \Delta\varepsilon^{(I)}{}_x$
$X_2 = \Delta\varepsilon^{(II)}{}_x$

Therefore, the result is:

$$\mu_z = \sqrt{\left(\frac{1}{x_2}\right)^2 \mu_{x_1} + \left(\frac{x_1}{x_2{}^2}\right)^2 \mu_{x_2}} \sim \mu_{x_1}\sqrt{\left(\frac{1}{x_2}\right)^2 + \left(\frac{x_1}{x_2{}^2}\right)^2}$$

(eq. 19)

if $\mu_{x_1} \sim \mu_{x_2}$.

Therefore, as regards the relative error, one obtains:

$$\frac{\mu_z}{z} = \mu_{x_1}\sqrt{\frac{1}{x_1{}^2} + \frac{1}{x_1{}^2}}$$

(eq. 20)

or, returning to real symbols,

$$\frac{\mu_v}{v} = \mu_{\Delta\varepsilon}\sqrt{\left(\frac{1}{\Delta\varepsilon^{(I)}{}_x}\right)^2 + \left(\frac{1}{\Delta\varepsilon^{(II)}{}_x}\right)^2}$$

(eq. 21)

For example, according to the hypothesis in which there is an uncertainty in the strain measurements equal to $10^{-5}$, which is fully achievable with current measurement techniques, and a measured strain value on the order of $10^{-3}$, which corresponds to a residual stress state on the order of 100 MPa, the result would be:

$$\frac{\mu_{(v)}}{v} \sim 1.4\%$$

(eq. 22)

In principle, the method presented herein can be realized by means of the aid of any means, be it mechanical or non-mechanical, for the controlled removal of material, and by means of any type of methodology, be it a contact or non-contact methodology, for the measurement of the relaxation strains.

The application of the method to thin coating films represents the case of greatest interest for industries, in that the techniques for measuring the Poisson's ratio for this type of structure are currently extremely limited and completely unsuitable for application in routine measurements of these properties.

In addition, the residual stress value is a parameter that is fundamental in the mechanical design of systems made up of a substrate and a thin coating film.

A coating is generally defined as "thin" if it is less than 10 $\mu$m in overall thickness.

In the case of the present method, the condition d/t < 1.0 proves to be necessary in order to avoid an influence of the elastic properties of the substrate on the relaxation strain measured; d/t < 0.8 is the preferred condition.

A further condition for the use of the equation:

$$\left.\frac{\Delta\varepsilon_x^{(II)}}{\Delta\varepsilon_x^{(I)}}\right|_{\frac{h}{d}>1.2} = \frac{1}{1+\nu}$$

for calculating the Poisson's ration is h/d > 1.2.

This implies that the characteristic dimension d of the cuts in the case of thin coatings must be on the order of a few microns, and therefore that machining and strain measurement methodologies with sub-micrometer resolution must be used.

The method for calculating the Poisson's ratio in the case of thin coatings comprises the stages of: realizing cuts of micrometric dimensions with the use of focused ion beam microscopy (FIB) and the adoption of an innovative procedure for the reduction of measurement artifacts; realizing high-resolution micrographs in-situ using scanning electron microscopy (SEM) techniques; analyzing relaxation strain using digital image correlation (DIC) techniques; measuring the elastic modulus using nano-indentation techniques; and calculating the Poisson's ratio and residual stresses through the model as recited hereinabove.

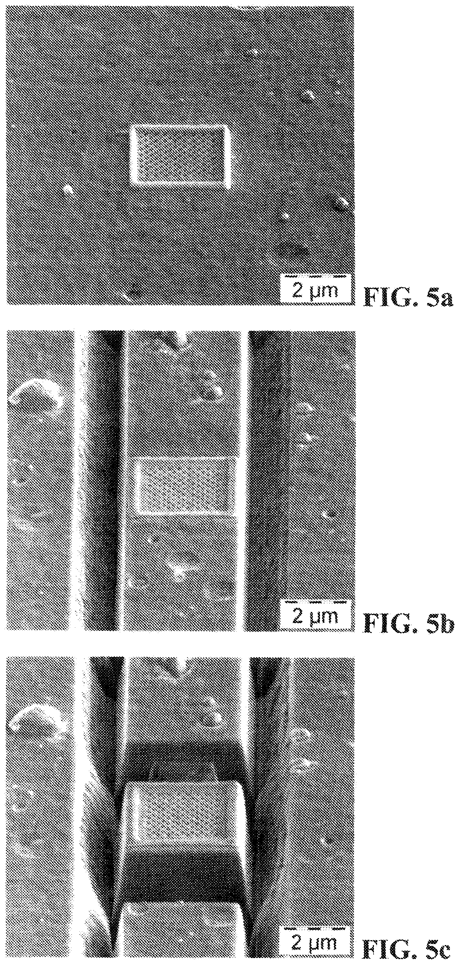

An example of the implementation of this method on a thin coating of chromium nitride (CrN) of a thickness of 3$\mu$m, obtained using physical vapor deposition (PVD) techniques, is represented in Figures 5A, 5B and 5C.

In further detail, the method just discussed comprises the stages of:

- depositing in-situ, by means of e-beam or i-beam assisted chemical vapor deposition, a thin layer, commonly called the "pad", of platinum, and realizing thereon a matrix of holes by means of ion beam micro-machining (see Figure 5A). The function performed by the platinum "mat" and by the relative matrix of holes is that of increasing the resolution of the relaxation strain measurement process. A rectangular rim is also deposited around the perimeter of the mat, with the objective of reducing the re-depositing of material removed in the course of the subsequent micro-machining process FIB;
- acquiring a high-resolution SEM image of the reference surface, or even a set of such SEM images in the event of an incremental trial (see figure 5b);
- realizing two parallel cuts corresponding to the first step of the method described previously hereinabove (see figure 5b);

- acquiring a second high-resolution SEM image of the reference surface, or even a second set of such SEM images in the event of an incremental trial (see figure 5b);
- realizing two parallel cuts corresponding to the second step of the method described previously hereinabove (see figure 5c);
- acquiring a third high-resolution SEM image of the reference surface, or even a third set of such SEM images in the event of an incremental trial (see figure 5c);
- the previously acquired three SEM images, or three sets of SEM images, are utilized, if necessary after a digital noise removal process, for the digital image correlation (DIC) process and the calculation of the x and y strains, using any one of the available commercial software programs such as Digital Image Correlation (DIC) Matlab© functions, Johns Hopkins University and the Karlsruhe Institute of Technology, for example. The relaxation strains thus obtained make it possible to assess the biaxiality of the stress and thus to choose which resolving equation to use for calculation of the strains;
- measuring the elastic modulus of the coating by means of the conventional nano-indentation technique; and
- calculating the residual stress and the Poisson's ratio using the equations reported hereinabove.

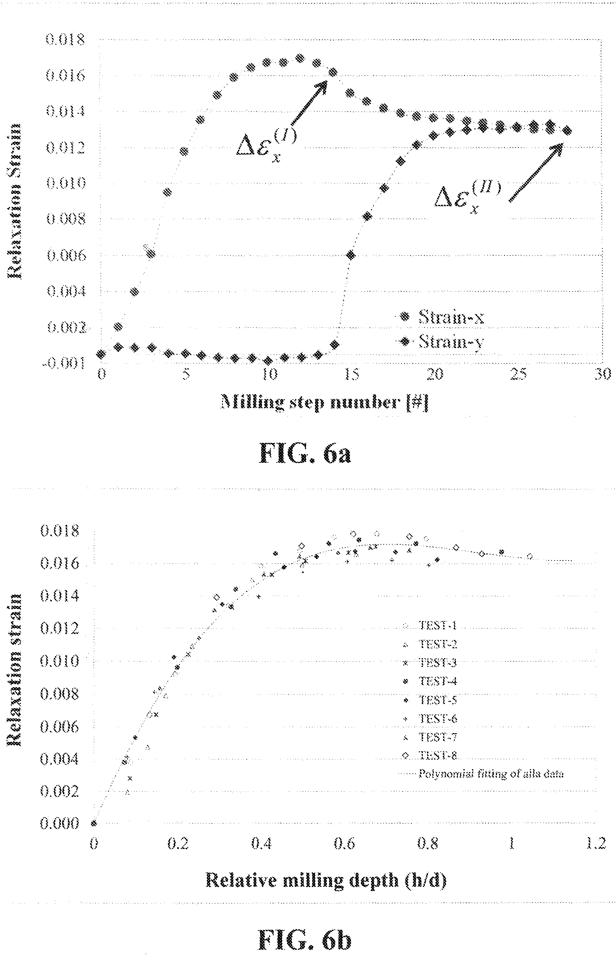

We shall now refer to Figures 6A and 6B, and to the following table:

$$\Delta\varepsilon_x^{(I)} = 0.0169 \pm 0.001$$

$$\Delta\varepsilon_x^{(II)} = 0.0136 \pm 0.0007$$

$$\nu = 0.248 \pm 0.007$$

$$\sigma_R = -5.04 \pm 0.22 \ GPa$$

which underline the results of the investigation conducted concerning the coating of CrN.

The calculations show Poisson's ratio values that are extremely consistent with the data available in the literature for similar materials, as well as a residual stress value in perfect agreement with that measured by means of x-ray diffraction (XRD).

In addition, the standard deviations values of the data show significant improvement in comparison to the standard deviation values usually obtained using other, conventional measurement techniques.

For the purpose of meeting additional, contingent needs, a person skilled in the field may introduce numerous additional changes and variants to the above-described method for measuring the Poisson's ratio and the residual stress, all of which, however, included within the scope of protection of the invention, as defined by the appended claims.

The method of the invention is applicable to any material, be it crystalline or amorphous material, bulk material or surface coating, without any limitation correlated with the microstructure or the geometry of the sample.

The form of implementation cited (thin coating on a dissimilar substrate) represents one of the most significant applications of the method, which may be applied to any type of material that has a state of surface residual stress, e.g. bead-blasted metals, case hardened or nitrided steels, metals plastically deformed by bending, casting metals, metallic glasses, tempered glasses.

**Claims**

1. A method for measuring the Poisson's ratio and the residual stress in materials with a surface residual stress field, comprising, in sequential order, the stages of:

   - predisposing a sample of material (1) with a surface residual stress field;
   - removing two first parallel strips (2a, 2b) of material from a surface of the sample (1) wherein there is defined an orthogonal Cartesian plane defined by an x-axis and a y-axis; and wherein the length of said two first parallel strips (2a, 2b) is greater than the distance between them and wherein, if the material is a surface coating material, the ratio between the distance between the first two strips (2a, 2b) and the thickness of the coating t is less than 1.0;
   - measuring the strains, at least along the x-axis ($\Delta\varepsilon^{(I)}_x$) and the y-axis ($\Delta\varepsilon^{(I)}_y$), of the sample of material (1) on said surface;
   - removing from said surface of the sample (1), two second parallel strips (3a, 3b) of material perpendicular to said two first parallel strips (2a, 2b);
   - measuring the strains, at least along the x-axis ($\Delta\varepsilon^{(II)}_x$) and the y-axis ($\Delta\varepsilon^{(II)}_y$), of the sample of material (1) on said surface;
   - calculating, following complete relaxation of the above-mentioned surface residual stresses, that is, for values of *h/d* greater than 1.2, the Poisson's ratio of the sample of material (1) by means of the following formula:

$$\left.\frac{\Delta\varepsilon^{(II)}_x}{\Delta\varepsilon^{(I)}_x}\right|_{\frac{h}{d}>1.2} = \frac{1}{1+\nu}$$

   where *v, h,* and d represent the Poisson's ratio, the height of each one of said strips (2a, 2b, 3a, 3b), and the distance between the two first parallel strips (2a, 2b), respectively.

2. The method according to claim 1, wherein the distance between the two first strips (2a, 2b) is on the same order of size as the height thereof.

3. The method according to claim 2, wherein the distance between the two first strips (2a, 2b) is on the same order of size as the height thereof, and the length thereof is at least three times greater than the distance thereof.

4. The method according to claim 3, wherein the distance between the two first strips (2a, 2b) is on the same order of size as the height thereof, and the length thereof is at least ten times greater than the distance thereof.

5. The method according to the preceding claims, wherein the distance between the two second strips (3a, 3b) is on the same order of size as the height thereof, and the length thereof is equal to or greater than the distance thereof.

6. The method according to any one of the preceding claims, **characterized in that** the stage of measuring the strains of the sample of material (1) on the above-mentioned surface, after the first stage of removal of material, also comprises measuring the strain of the sample of material (1) along a direction oriented at 45° with respect to the x- and y- axes.

7. The method according to any one of the preceding claims, **characterized in that** the stage of measuring the strains of the sample of material (1) on the above-mentioned surface, after the second stage of removal of material, also comprises measuring the strain of the sample of material (1) along a direction oriented at 45° with respect to the x- and y- axes.

8. The method according to claim 1, wherein the ratio between the distance between the first two strips and the thickness of the coating t is less than 0.8 (d/t<0.8).

**Patentansprüche**

1. Verfahren zur Messung des Poisson-Verhältnisses und der Eigenspannung in Materialien mit einem Oberflächeneigenspannungsfeld, umfassend, in sequentieller Reihenfolge, die Schritte:

- Voranordnen einer Materialprobe (1) mit einem Oberflächeneigenspannungsfeld;
- Entfernen von zwei ersten parallelen Streifen (2a, 2b) des Materials von einer Oberfläche der Probe (1), wobei eine orthogonale kartesische Ebene durch eine x-Achse und eine y-Achse definiert wird;
und wobei die Länge der beiden ersten parallelen Streifen (2a, 2b) größer ist als die Distanz zwischen diesen, und wobei, wenn das Material ein Oberflächenbeschichtungsmaterial ist, das Verhältnis zwischen der Distanz zwischen den ersten beiden Streifen (2a, 2b) und der Dicke der Beschichtung t kleiner ist als 1,0;
- Messen der Verformungen, mindestens entlang der x-Achse ($\Delta\varepsilon^{(I)}_x$) und der y-Achse ($\Delta\varepsilon^{(I)}_y$), der Materialprobe (1) an der Oberfläche;
- Entfernen, von der Oberfläche der Probe (1), von zwei zweiten parallelen Streifen (3a, 3b) des Materials senkrecht zu den beiden ersten parallelen Streifen (2a, 2b);
- Messen der Verformungen, mindestens entlang der x-Achse ($\Delta\varepsilon^{(II)}_x$) und der y-Achse ($\Delta\varepsilon^{(II)}_y$), der Materialprobe (1) an der Oberfläche;
- Berechnen, nach vollständiger Entspannung der oben angeführten Oberflächeneigenspannnnungen, das heißt, für Werte von h/d größer als 1,2, des Poisson-Verhältnisses der Materialprobe (1) mittels der folgenden Formel:

$$\left. \frac{\Delta\varepsilon^{(II)}_x}{\Delta\varepsilon^{(I)}_x} \right|_{\frac{h}{d}>1,2} = \frac{1}{1+v}$$

wobei *v*, h und d das Poisson-Verhältnis, die Höhe jedes einen der Streifen (2a, 2b, 3a, 3b) bzw. die Distanz zwischen den beiden ersten parallelen Streifen (2a, 2b) darstellen.

2. Verfahren nach Anspruch 1, wobei die Distanz zwischen den beiden ersten Streifen (2a, 2b) in der gleichen Größenordnung ist wie die Höhe davon.

3. Verfahren nach Anspruch 2, wobei die Distanz zwischen den beiden ersten Streifen (2a, 2b) in der gleichen Größenordnung ist wie die Höhe davon, und die Länge davon mindestens dreimal größer ist als die Distanz davon.

**4.** Verfahren nach Anspruch 3, wobei die Distanz zwischen den beiden ersten Streifen (2a, 2b) in der gleichen Größenordnung ist wie die Höhe davon, und die Länge davon mindestens zehnmal größer ist als die Distanz davon.

**5.** Verfahren nach den vorhergehenden Ansprüchen, wobei die Distanz zwischen den beiden zweiten Streifen (3a, 3b) in der gleichen Größenordnung ist wie die Höhe davon, und die Länge davon gleich der oder größer als die Distanz davon ist.

**6.** Verfahren nach einem der vorhergehenden Ansprüche, **dadurch gekennzeichnet, dass** der Schritt des Messens der Verformungen der Materialprobe (1) an der oben angegebenen Oberfläche, nach dem ersten Schritt des Entfernens von Material, auch ein Messen der Verformung der Materialprobe (1) entlang einer Richtung umfasst, die unter 45° in Bezug auf die x- und y-Achse ausgerichtet ist.

**7.** Verfahren nach einem der vorhergehenden Ansprüche, **dadurch gekennzeichnet, dass** der Schritt des Messens der Verformungen der Materialprobe (1) an der oben angegebenen Oberfläche, nach dem zweiten Schritt des Entfernens von Material, auch ein Messen der Verformung der Materialprobe (1) entlang einer Richtung umfasst, die unter 45° in Bezug auf die x- und y-Achse ausgerichtet ist.

**8.** Verfahren nach Anspruch 1, wobei das Verhältnis zwischen der Distanz zwischen den ersten beiden Streifen und der Dicke der Beschichtung t kleiner ist als 0,8 (d/t<0,8).

**Revendications**

**1.** Procédé de mesure du coefficient de Poisson et de la contrainte résiduelle dans des matériaux avec un champ de contrainte résiduelle de surface, comprenant, dans l'ordre séquentiel, les étapes consistant à :

- prédisposer un échantillon de matériau (1) avec un champ de contrainte résiduelle de surface ;
- retirer deux premières bandes parallèles (2a, 2b) du matériau d'une surface de l'échantillon (1) dans lequel il est défini un plan Cartésien orthogonal défini par un axe x et un axe y ;
et dans lequel la longueur desdites deux premières bades parallèles (2a, 2b) est plus grande que la distance entre elles et dans lequel, si le matériau est un matériau de revêtement de surface, le rapport entre la distance entre les deux premières bandes (2a, 2b)et l'épaisseur du revêtement est inférieure à 1,0 ;
- mesurer les contraintes, au moins le long de l'axe x ($\Delta\varepsilon^{(I)}_x$) et l'axe y ($\Delta\varepsilon^{(I)}_y$), de l'échantillon de matériau (1) sur ladite surface ;
- retirer de ladite surface de l'échantillon (1), deux secondes bandes parallèles (3a, 3b) de matériau perpendiculaire auxdites deux premières bandes parallèles (2a, 2b) ;
- mesurer les contraintes, au moins le long de l'axe x ($\Delta\varepsilon^{(II)}_x$) et de l'axe y ($\Delta\varepsilon^{(II)}_y$), de l'échantillon de matériau (1) sur ladite surface,
- calculer, suivant la relaxation complète des contraintes résiduelles de surface mentionnées ci-dessus, c'est à dire, pour les valeurs de h/d supérieures à 1,2, le coefficient de Poisson de l'échantillon de matériau (1) au moyen de la formule suivante :

$$\left.\frac{\Delta\varepsilon^{(II)}_x}{\Delta\varepsilon^{(I)}_x}\right|_{\frac{h}{d}>1.2} = \frac{1}{1+v}$$

dans lequel v, h et d représentent le coefficient de Poisson, la hauteur de chacune desdites bandes (2a, 2b, 3a, 3b) et la distance entre les deux premières bandes parallèles (2a, 2b), respectivement.

**2.** Procédé selon la revendication 1, dans lequel la distance entre les deux premières bandes (2a, 2b) est du même ordre de taille comme la hauteur de ces dernières.

**3.** Procédé selon la revendication 2, dans lequel la distance entre les deux premières bandes (2a, 2b) est du même ordre de taille que la hauteur de ces dernières, et la longueur de ces dernières est au moins trois fois supérieure à la distance de ces dernières.

4. Procédé selon la revendication 3, dans lequel la distance entre les deux premières bandes (2a, 2b) est du même ordre de taille que la hauteur de ces dernières, et la longueur de ces dernières est au moins dix fois supérieure à la distance de ces dernières.

5. Procédé selon les revendications précédentes, dans lequel la distance entre les deux secondes bandes (3a, 3b) est du même ordre de taille que la hauteur de ces dernières, et la longueur de ces dernières est égale ou supérieure à la distance de ces dernières.

6. Procédé selon une quelconque des revendications précédentes, **caractérisé en ce que** l'étape de mesure de l'échantillon de matériau (1) sur la surface mentionnée ci-dessus, après la première étape de retrait de matériau, comprend aussi de mesurer la résistance de l'échantillon du matériau (1) le long d'une direction orientée à 45° par rapport aux axes x et y.

7. Procédé selon une quelconque des revendications précédentes, caractérisé e ce que l'étape de mesure des contraintes de l'échantillon de matériau (1) sur la surface mentionnée ci-dessus, après la seconde étape de retrait du matériau, comprend aussi de mesure la résistance de l'échantillon de matériau (1) le long d'une direction orientée à 45° par rapport aux axes x et y.

8. Procédé selon la revendication 1, dans lequel le rapport entre la distance entre les deux premières bandes et l'épaisseur du revêtement t est inférieure ç 0,8 (d/t<0,8).

FIG. 1A

FIG. 1B

FIG. 1C

FIG.2A

FIG.2B

FIG.2C

FIG.3

FIG. 4a

FIG. 4b

FIG. 4c

FIG. 5a

FIG. 5b

FIG. 5c

**FIG. 6a**

**FIG. 6b**

FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4823607 A

**Non-patent literature cited in the description**

- Residual stress evaluation at the micrometer scale: Analysis of thin coatings by FIB milling and digital image correlation. **KORSUNSKY et al.** Surface and Coatings Technology. 2010, vol. 205, 2393-2403